# EUROPÄISCHE PATENTSCHRIFT

(11) **EP 2 848 504 B1**
(45) Veröffentlichungstag und Bekanntmachung des Hinweises auf die Patenterteilung: **25.04.2018**
(21) Anmeldenummer: 14183112.3
(22) Anmeldetag: 02.09.2014
(51) Int. Cl.: B62D 63/06

(54) **Routenzuganhänger mit Personenschutzsystem**
Route train trailer with personal protection system
Remorque de chariot tracteur dotée d'un système de protection de personne

(30) Priorität: 17.09.2013 DE 102013110213
(43) Veröffentlichungstag der Anmeldung: 18.03.2015
(73) Patentinhaber: STILL GmbH, 22113 Hamburg (DE)
(72) Erfinder: Krüger-Basjmeleh, Tino, 25469 Halstenbek (DE); Viereck, Volker, 23898 Kühsen (DE); Jensen, Romy, 22177 Hamburg (DE)
(74) Vertreter: Patentship Patentanwaltsgesellschaft mbH

(56) Entgegenhaltungen:
- DE-A1- 3 327 240
- DE-A1-102004 052 618
- DE-U1-202012 002 489

## Beschreibung

Die Erfindung betrifft einen Anhänger für einen Routenzug mit einer Zugvorrichtung nach dem Oberbegriff des Patentanspruchs 1 sowie einen entsprechenden Routenzug.

Bekannt ist, für den innerbetrieblichen Warentransport und Materialfluss, insbesondere die Materialversorgung von Produktionsbereichen, Routenzüge einzusetzen, die auch als Schlepperzug bezeichnet werden. Ein Routenzug besteht dabei aus einem Schlepper und mindestens einem Anhänger, jedoch im Regelfall aus mehreren Anhängern. Die Anhänger weisen dabei üblicherweise eine Anhängerdeichsel auf, mit der sie in eine Kupplung des vorauslaufenden Fahrzeuges eingehängt sind. Dabei werden üblicherweise die Anhänger am Beladeort manuell beladen und ebenso an den Verwendungsorten der Ladegüter manuell entladen. Auf den Anhängern können die zu transportierenden Ladegüter bzw. Waren auch mittels Transportbehältern, wie etwa Paletten oder Gitterboxen befördert werden. Es sind auch Anhänger bekannt, die eine automatisiertes Aufnehmen und Absetzen von solchen bereits beladenen Paletten bzw. Gitterboxen ermöglichen.

In einer weiteren Stufe der Automatisierung fährt der Routenzug automatisiert ohne Fahrer, indem er von einem autonomen Schlepper gezogen wird.

Bei allen diesen beschriebenen Arten von Routenzügen, so auch bereits bei einem durch eine Person auf dem Schlepper geführten Routenzug, der automatisiert Transportbehälter aufnimmt und absetzt, jedoch insbesondere bei einem Routenzug, der voll autonom fährt, bei dem aber die Anhänger von Personen beladen und/oder entladen werden, ergeben sich Sicherheitsanforderungen in Bezug auf Personen, die sich beim Anfahren des Routenzuges zwischen Anhängern im Bereich der Anhängerdeichsel bzw. einer Zugdeichsel befinden könnten.

Zur Erfüllung dieser Sicherheitsanforderungen besteht eine Norm, wie ein Routenzug bei einer automatisierten Fahrt abzusichern ist. Dabei ist vor dem Anfahren des Routenzuges ein akustisches Signal für mindestens eine Zeitdauer von 2 Sekunden abzugeben. Die Geschwindigkeit des Routenzuges darf nach dem Anfahren eine Maximalgeschwindigkeit von 0,3 m/s für eine Mindestzeitdauer von 5 Sekunden nicht überschreiten. Schließlich ist als optische Warnvorrichtung eine Markierung im Bereich der Anhängerdeichsel in den Farben schwarz/gelb oder alternativ rot/weiß vorzusehen. Durch diese Maßnahmen, so durch das langsame Anfahren und das akustische Signal, soll erreicht werden, dass Personen auf die Gefahren aufmerksam werden und den Gefahrenbereich in jedem Fall sicher verlassen können bei einem Anfahren des Routenzuges, um Unfälle sowie Verletzungen zu vermeiden.

Nachteilig an diesem Stand der Technik ist, dass Personen in einem Gefahrenbereich zwischen den Anhängern mit den üblicherweise vorgesehenen Sensormitteln nicht erkannt werden und die Absicherung sich auf ein selbstständiges Verlassen des Gefahrenbereiches durch die Personen aufgrund der Warneinrichtungen der Anhänger beim Anfahren des Routenzuges stützt.

Die DE 20 2012 002489 U1 offenbart eine Schaltleiste am Vorderende eines Routenzuganhängers, mit dem eine Absicherung erfolgen kann gegen ein Dazwischentreten einer Person zwischen zwei Anhänger.

Der vorliegenden Erfindung liegt die Aufgabe zugrunde, einen Anhänger für einen Routenzug sowie einen Routenzug zur Verfügung zu stellen, die die zuvor genannten Nachteile vermeiden und die Sicherheit des Betriebes des Routenzuges erhöhen.

Diese Aufgabe wird durch einen Anhänger für einen Routenzug mit den Merkmalen des unabhängigen Patentanspruchs 1 sowie durch einen Routenzug mit den Merkmalen des Patentanspruchs 9 gelöst. Vorteilhafte Weiterbildungen der Erfindung sind in den Unteransprüchen angegeben.

Die Aufgabe wird dadurch gelöst, indem bei einem Anhänger für einen Routenzug mit einer Zugvorrichtung, insbesondere einer frontseitigen Zugdeichsel und einer rückseitigen Anhängerkupplung, sowie einer Signalverbindung zur Übermittlung eines Signals an einen Schlepper des Routenzugs, eine Sicherheitsvorrichtung des Anhängers für die Übermittlung eines Notfallsignals über die Signalverbindung an den Schlepper vorgesehen ist, wobei die Sicherheitsvorrichtung bei Annäherung eines Hindernisses von vorne an den Anhänger oder bei einem seitlichen Eindringen eines Hindernisses in einen Zwischenraum zwischen einem vorausfahrenden, ziehenden Fahrzeug und dem Anhänger ein Notfallsignal erzeugt. Erfindungsgemäß umfasst die Sicherheitsvorrichtung ein seitlich entlang des Zwischenraums zu einem vorausfahrenden, ziehenden Fahrzeug gespanntes Band, das durch Dehnung und/oder Zug auf einen dem Anhänger zugehörigen Befestigungspunkt ein Eindringen eines Hindernisses in den Zwischenraum erfasst und ein Notfallsignal erzeugt.

Dadurch werden vorteilhaft die Gefahren vermindert, die insbesondere entstehen, wenn automatisiert ohne Fahrer fahrende Routenzüge von Personen beladen und entladen werden. Falls eine der Personen dabei in dem Zwischenraum zwischen einem Anhänger und einem vorausfahrenden, ziehenden Fahrzeug, dies kann sowohl der Schlepper wie auch ein innerhalb des Routenzuges vor diesem angeordneter weiterer Anhänger sein, steht, so löst die Sicherheitsvorrichtung aus und ein Anfahren des Routenzuges wird verhindert oder sofort gestoppt. Dabei werden die Notabschaltungsvorrichtungen des Schleppers genutzt, die über die Signalverbindung betätigt werden. Die Unfallgefahr beim Betrieb von autonomen bzw. automatisierten Routenzügen wird deutlich reduziert. Hierdurch wird auch die Fahrzeugverfügbarkeit erhöht, da es zu einer Verminderung der Unfallzahlen kommt. Durch das Band wird insbesondere schon bei Stillstand des Routenzuges ein Notfallsignal ausgelöst und ein Anfahren eines Schleppers verhindert, solange eine Person sich in diesem Zwischenraum befindet und dadurch das Band dehnt bzw. einen Zug auf den Verankerungspunkt des Bandes an dem Anhänger auslöst. Es ist auch denkbar, dass das Notfallsignal aufgrund der Eigenschaften des Bandes allein schon durch die Dehnung des Bandes ausgelöst wird. An dem vorausfahrenden Fahrzeug, entweder dem Schlepper oder einem weiteren Anhänger, muss in diesem Fall eine Möglichkeit vorgesehen werden, das Band zu befestigen. Es ist denkbar, eine Signalauslösung nur im Moment des Anfahrens vorzusehen, um einen Fehlalarm bei Kurvenfahrt zu vermeiden.

Sicherheitseinrichtungen für Flurförderzeuge und Fahrzeuge, bei denen das Anstoßen an ein Hindernis über den mechanischen Kontakt erfasst wird, stehen kostengünstig und zuverlässig zur Verfügung. Diese sind auch im Moment des Anfahrens mit den geringen Geschwindigkeiten, die durch insbesondere die oben beschriebene Norm vorgegeben werden, ausreichend, um Verletzungen einer Person zu verhindern. Ein Anhalten des Routenzuges bzw. sofortiges Abbrechen des Anfahrvorgangs kann ausreichend schnell erfolgen.

In einer günstigen Ausführungsform umfasst die Sicherheitsvorrichtung eine oder mehrere an der Vorderseite des Anhängers angeordnete Schaltschutzleisten.

Solche Schaltschutzleisten werden auch als Bumper bezeichnet und lösen ein Signal aus, wenn ein mechanisches Hindernis mit einer gewissen Mindestkraft gegen diese gedrückt wird. Dabei können die Schaltschutzleisten so angeordnet werden, dass über die gesamte Breite des Anhängers ein Signal ausgelöst wird, wenn ein Gegenstand, insbesondere eine Person gegen den anfahrenden Anhänger stößt.

Die Schaltschutzleiste kann in Bodennähe angeordnet sein.

Dies ist günstig, da durch das Anfahren an eine Person nahe dem Boden es zu typischen Verletzungen im Knöchel- und Fußbereich kommt und diese Verletzungsgefahr dadurch verringert werden kann.

Der Befestigungspunkt des Bandes kann an dem Anhänger einen vorgespannten Aufrollmechanismus aufweisen und ein Zug auf den Befestigungspunkt durch den Aufrollmechanismus erfasst werden.

Wenn das Band durch eine in den Zwischenraum tretende Person in die Länge gezogen wird, kommt es zu einer Abrollbewegung, die das Notfallsignal auslösen kann.

In einer günstigen Ausführungsform wird das Band an dem vorausfahrenden Fahrzeug über zwei Umlenkführungen zurück zu dem Anhänger und somit an beiden Seiten des Zwischenraums entlang geführt. Bevorzugt weist der Anhänger selbst an seiner Rückseite dann ebenfalls zwei Umlenkführungen auf.

Diese Umlenkführungen können abgerundete Stäbe sein, über die das Band gleitet, oder auch zwei drehbare Rollen. Insbesondere wird durch eine solche Führung des Bandes eine Schiefstellung eines Anhängers gegenüber dem ziehenden, vorausfahrenden Fahrzeug ausgeglichen, so dass eine Längung des Bandes, eventuell über ein Toleranzmaß hinaus, nur durch eine in den Zwischenraum hineintretende Person erfolgt sein kann. Eine Sicherheitsüberprüfung der Zwischenräume im Moment des Anfahrens kann somit auch bei einem Routenzug erfolgen, der in einer Kurve steht.

Vorteilhaft löst das über die Signalverbindung übermittelte Notfallsignal eine Notabschaltung des Schleppers aus.

Es können vorteilhaft und kostengünstig somit die bei einem Schlepper bzw. Schlepper üblicherweise vorhandenen Notabschaltungsmittel genutzt werden.

Die Signalverbindung kann aus einem Sender für eine drahtlose Signalübertragung bestehen.

Eine drahtlose Übertragung des Notfallsignals ermöglicht eine flexible Anpassung und leichte Nachrüstung.

In einer Weiterbildung des Anhängers kann die Signalverbindung aus zwei so durch den Anhänger geführten Leitungen bestehen, dass diese mit dem vorausfahrenden Fahrzeug sowie einen eventuell angehängten Anhänger verbunden werden können und das Notfallsignal durch die Unterbrechung mindestens einer Leitung erzeugt wird.

Eine solche Lösung ist sehr einfach aufzubauen und sicher sowie zuverlässig. Die zwei Leitungen können zum einen die Fahrzeugmasse und eine Signalleitung sein, oder auch zwei Signalleitung. In dem letzten Anhänger eines Routenzuges müssen diese zwei Leitungen miteinander verbunden werden. Wenn nun irgendwo in dem Routenzug eine der beiden Leitungen unterbrochen wird, so kann in dem Schlepper eine Unterbrechung des Stromkreises festgestellt werden und eine Notabschaltung ausgelöst werden. Dabei wird in dem Schlepper bzw. Schleppfahrzeug zwischen den zwei Leitungen ein Potential angelegt und ein Signalstrom durch diesen Stromkreis geleitet, beispielsweise zwischen Fahrzeugmasse und einer der Signalleitungen oder zwischen den zwei Signalleitung, der durch eine Unterbrechung als Notfallsignal ausgeschaltet wird.

Die Aufgabe wird auch gelöst durch einen Routenzug, der aus einem Schlepper mit einer Anhängerkupplung sowie mindestens einem Anhänger besteht, wie er zuvor beschrieben wurde.

Der Routenzug weist die bereits dargestellten Vorteile auf.

Weitere Vorteile und Einzelheiten der Erfindung werden anhand der in den schematischen Figuren dargestellten Ausführungsbeispiele näher erläutert. Hierbei zeigt,
- Fig. 1: in Aufsicht ein Ausführungsbeispiel eines Routenzuges mit erfindungsgemäßen Anhängern und
- Fig. 2: in Aufsicht ein weiteres Ausführungsbeispiel eines Routenzuges mit erfindungsgemäßen Anhängern.

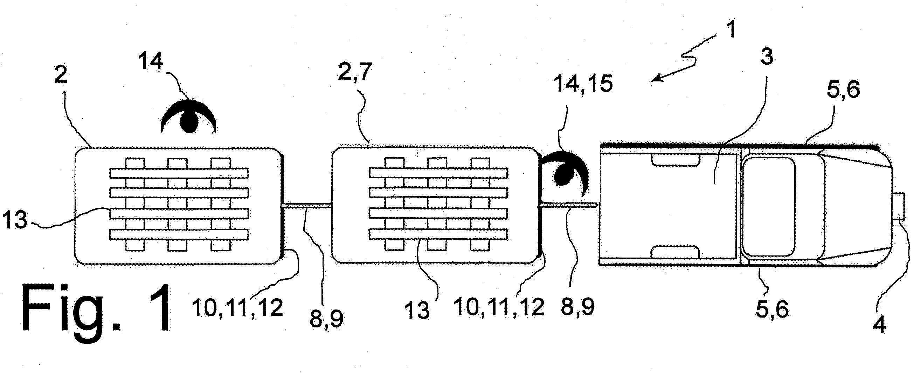

Die Fig. 1 zeigt in Aufsicht ein Ausführungsbeispiel eines Routenzuges 1 mit erfindungsgemäßen Anhängern 2, die von einem Schlepper 3 gezogen werden. Der Schlepper 3 weist an seiner Frontseite einen zusätzlichen Laserscanner 4 auf, der für die Erfindung nicht erforderlich ist und mit dem der Raum vor dem Schlepper 3 auf Hindernisse wie etwa Personen überwacht werden kann. Ebenso weist der Schlepper 3 für die Erfindung nicht unbedingt erforderliche seitliche Schaltschutzleisten 5 als Bumper 6 auf. Durch den Laserscanner 4 wie auch durch die Schaltschutzleiste 5 kann über die Sicherheitsvorrichtungen des Schleppers 3 eine Notabschaltung des autonom fahrenden Schleppers 3 erfolgen.

Die zwei Anhänger 2 weisen jeweils eine Zugvorrichtung 8 bestehend aus einer Zugdeichsel 9 und einer nicht näher dargestellten Anhängerkupplung auf. Die Anhängerkupplung kann dabei in verschiedenen Ausführungen, die nach dem Stand der Technik bekannt sind, gestaltet sein, wie Kugelkopf, Zugbolzen für Zugösen und Zughaken. An der Vorderseite der Anhänger 2 ist im Bodenbereich jeweils eine Schaltschutzleiste 10 bzw. ein Bumper 11 als Sicherheitsvorrichtung 12 vorgesehen, die bei mechanischem Kontakt mit einem Hindernis ein Notfallsignal über eine nicht dargestellte Signalverbindung an den Schlepper 3 übermittelt und dessen Sicherheitsvorrichtungen auslöst, bzw. den Schlepper 3 notabschaltet.

Auf den Anhängern 2 werden auf Paletten 13 Waren transportiert. Wenn die Anhänger 2 durch Personen 14 be- oder entladen werden und nach Beendigung dieser Tätigkeit sich noch eine Person 15 in dem Zwischenraum im vorliegenden Fall zwischen dem Schlepper 3 als vorausfahrenden Fahrzeug und einem ersten Anhänger 7 befindet, so kommt es beim Anfahren des Schleppers 3 zu einem Kontakt der Person 15 mit der Schaltschutzleiste 10. Dadurch wird ein Notfallsignal an den Schlepper 3 übermittelt und die Sicherheitsvorrichtungen des Schleppers 3 schalten den Schlepper 3 sofort ab. Eine Verletzung der Person 15 wird vermieden.

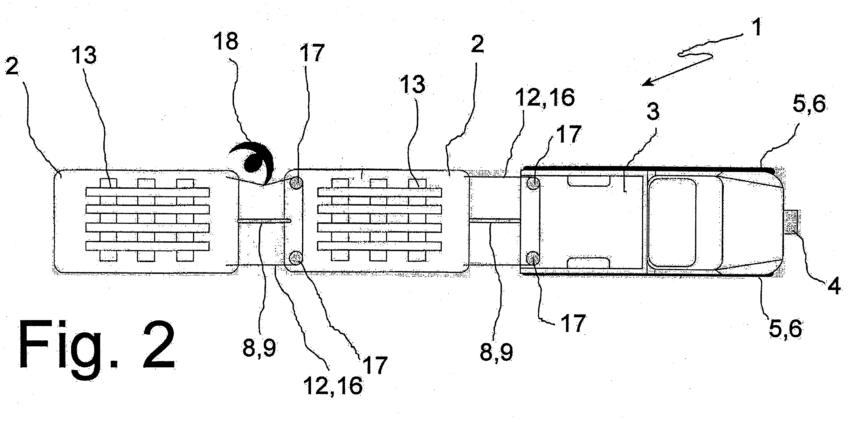

Die Fig. 2 zeigt in Aufsicht ein weiteres Ausführungsbeispiel des Routenzuges 1 mit erfindungsgemäßen Anhängern 2, die die Paletten 13 mit Waren befördern und die von dem Schlepper 3 gezogen werden, wobei den Komponenten des vorherigen Ausführungsbeispiels entsprechende Komponenten mit denselben Bezugszeichen versehen sind. Der Schlepper 3 weist an seiner Frontseite ebenfalls den zusätzlichen Laserscanner 4 auf, der für die Erfindung nicht erforderlich ist und mit dem der Raum vor dem Schlepper 3 auf Hindernisse wie etwa Personen überwacht werden kann. Ebenso weist der Schlepper 3 die für die Erfindung nicht unbedingt erforderlichen seitlichen Schaltschutzleisten 5 als Bumper 6 auf. Durch den Laserscanner 4 wie auch durch die Schaltschutzleiste 5 kann über die Sicherheitsvorrichtungen des Schleppers 3 eine Notabschaltung des autonom fahrenden Schleppers 3 erfolgen.

Bei den zwei Anhängern 2 mit jeweils der aus einer Zugdeichsel 9 sowie der nicht dargestellten Anhängerkupplung bestehenden Zugvorrichtung 8 ist als Sicherheitsvorrichtung 12 ein Band 16 vorgesehen. Das Band 16 ist jeweils seitlich entlang des Zwischenraums zu dem vorausfahrenden, ziehenden Fahrzeug gespannt und wird über zwei Umlenkführungen 17 als ein durchgehendes Band von dem Anhänger 2 über das vorausfahrende Fahrzeug zurück zu dem Anhänger 2 geführt.

Wenn im Moment des Anfahrens des Schleppers 3 eine Person 18 sich zu weit in dem Zwischenraum befindet, wie dargestellt, so wird das Band 16 ausgelenkt und es entsteht ein Zug auf den Befestigungspunkt des Bandes 16 an dem Anhänger 2. Dadurch wird ein Notfallsignal ausgelöst und über die nicht dargestellte Signalverbindung an den Schlepper 3 übermittelt, das dessen Sicherheitsvorrichtungen auslöst, bzw. den Schlepper 3 notabschaltet.

## Patentansprüche

1. Anhänger für einen Routenzug (1) mit einer Zugvorrichtung (8), insbesondere einer frontseitigen Zugdeichsel (9) und einer rückseitigen Anhängerkupplung, sowie einer Signalverbindung zur Übermittlung eines Signals an einen Schlepper (3) des Routenzugs (1), wobei eine Sicherheitsvorrichtung (12) des Anhängers (2) für die Übermittlung eines Notfallsignals über die Signalverbindung an den Schlepper (3) vorgesehen ist, wobei die Sicherheitsvorrichtung (12) bei Annäherung eines Hindernisses von vorne an den Anhänger (2) und/oder bei einem seitlichen Eindringen eines Hindernisses in einen Zwischenraum zwischen einem vorausfahrenden, ziehenden Fahrzeug und dem Anhänger (2) ein Notfallsignal erzeugt, wobei die Sicherheitsvorrichtung (12) ein Notfallsignal bei mechanischem Kontakt erzeugt,
**dadurch gekennzeichnet,**
**dass** die Sicherheitsvorrichtung (12) ein seitlich entlang des Zwischenraums zu dem vorausfahrenden, ziehenden Fahrzeug gespanntes Band (16) umfasst, das durch Dehnung und/oder Zug auf einen Befestigungspunkt an dem Anhänger (2) ein Eindringen eines Hindernisses in den Zwischenraum erfasst und ein Notfallsignal erzeugt.

2. Anhänger nach Anspruch 1,
**dadurch gekennzeichnet,**
**dass** die Sicherheitsvorrichtung (12) eine oder mehrere an der Vorderseite des Anhängers angeordnete Schaltschutzleisten (10) umfasst.

3. Anhänger nach Anspruch 2,
**dadurch gekennzeichnet,**
**dass** die Schaltschutzleiste (10) in Bodennähe angeordnet ist.

4. Anhänger einem der Ansprüche 1 bis 3,
**dadurch gekennzeichnet,**
**dass** der Befestigungspunkt des Bands an dem Anhänger (2) einen vorgespannten Aufrollmechanismus aufweist und ein Zug des Bandes auf den Befestigungspunkt durch den Aufrollmechanismus erfasst wird.

5. Anhänger nach einem der Ansprüche 1 bis 4,
**dadurch gekennzeichnet,**
**dass** das Band (16) an dem vorausfahrenden Fahrzeug über zwei Umlenkführungen (17) zurück zu dem Anhänger (2) und somit an beiden Seiten des Zwischenraums entlang geführt wird und der Anhänger (2) zwei entsprechende Umlenkführungen (17) aufweist.

6. Anhänger nach einem der Ansprüche 1 bis 5,
**dadurch gekennzeichnet,**
**dass** das über die Signalverbindung übermittelte Notfallsignal eine Notabschaltung eines Schleppers (3) auslöst.

7. Anhänger nach einem der Ansprüche 1 bis 6,
**dadurch gekennzeichnet,**
**dass** die Signalverbindung aus einem Sender für eine drahtlose Signalübertragung besteht.

8. Anhänger nach einem der Ansprüche 1 bis 7,
**dadurch gekennzeichnet,**
**dass** die Signalverbindung aus zwei so durch den Anhänger (2) geführten Leitungen besteht, dass diese mit dem vorausfahrenden Fahrzeug sowie einem eventuell angehängten Anhänger (2) verbunden werden können und das Notfallsignal durch die Unterbrechung mindestens einer Leitung erzeugt wird.

9. Routenzug bestehend aus einem Schlepper mit einer Anhängerkupplung sowie mindestens einem Anhänger (2) nach einem der Ansprüche 1 bis 8.

## Claims

1. Trailer for a route train (1) having a traction device (8), in particular a front-side towbar (9) and a rear-side trailer hitch, as well as a signal connection for transferring a signal to a tractor (3) of the route train (1), wherein a safety device (12) of the trailer (2) is provided for transferring an emergency signal to the tractor (3) via the signal connection, wherein the safety device (12) generates an emergency signal when an obstacle approaches the trailer (2) from the front and/or when an obstacle penetrates laterally into an intermediate space between a towing vehicle travelling ahead and the trailer (2), wherein the safety device (12) generates an emergency signal in the case of mechanical contact,
**characterized**
**in that** the safety device (12) comprises a belt (16) which is tensioned laterally along the intermediate space with respect to the towing vehicle which is travelling ahead, which belt (16) registers penetration of an obstacle into the intermediate space through extension and/or tension with respect to an attachment point on the trailer (2) and generates an emergency signal.

2. Trailer according to Claim 1,
**characterized**
**in that** the safety device (12) comprises one or more contactor strips (10) which are arranged on the front side of the trailer.

3. Trailer according to Claim 2,
**characterized**
**in that** the contactor strip (10) is arranged near to the ground.

4. Trailer according to one of Claims 1 to 3,
**characterized**
**in that** the attachment point of the belt to the trailer (2) has a pre-stressed rolling-up mechanism and the tension of the belt with respect to the attachment point is detected by the rolling-up mechanism.

5. Trailer according to one of Claims 1 to 4,
**characterized**
**in that** the belt (16) on the vehicle travelling ahead is guided over two deflection guides (17) and back to the trailer (2) and therefore is guided along on both sides of the intermediate space, and the trailer (2) has two corresponding deflection guides (17).

6. Trailer according to one of Claims 1 to 5,
**characterized**
**in that** the emergency signal which is transferred via the signal connection triggers an emergency shutdown of a tractor (3).

7. Trailer according to one of Claims 1 to 6,
**characterized**
**in that** the signal connection is composed of a transmitter for a wireless signal transmission.

8. Trailer according to one of Claims 1 to 7,
**characterized**
**in that** the signal connection is composed of two lines which are guided through the trailer (2) in such a way that said lines can be connected to the vehicle travelling ahead and to a possibly hitched trailer (2), and the emergency signal is generated by the interruption of at least one line.

9. Route train composed of a tractor with a trailer hitch and at least one trailer (2) according to one of Claims 1 to 8.

## Revendications

1. Remorque pour un train routier (1) comportant un dispositif de remorquage (8), en particulier un timon avant (9) et un attelage de remorque arrière, ainsi qu'une liaison de signal destinée à transmettre un signal à un tracteur (3) du train routier (1), dans laquelle il est prévu un dispositif de sécurité (12) de la remorque (2) destiné à transmettre au tracteur (3) un signal d'urgence par l'intermédiaire de la liaison de signal, dans laquelle le dispositif de sécurité (12) génère un signal d'urgence lorsqu'un obstacle se rapproche de la remorque (2) par l'avant et/ou lorsqu'un obstacle pénètre latéralement dans un espace intermédiaire situé entre un véhicule tracteur situé devant et la remorque (2), dans lequel le dispositif de sécurité (12) génère un signal d'urgence en cas de contact mécanique,
**caractérisée en ce que** le dispositif de sécurité (12) comprend une bande (16) tendue latéralement le long de l'espace intermédiaire jusqu'au véhicule tracteur situé devant, laquelle bande détecte la pénétration d'un obstacle dans l'espace intermédiaire par l'étirement et/ou la traction exercée sur un point d'attache situé sur la remorque (2) et génère un signal d'urgence.

2. Remorque selon la revendication 1,
**caractérisée en ce que** le dispositif de sécurité (12) comprend une ou plusieurs bandes de protection contre les connexions (10) disposées à l'avant de la remorque.

3. Remorque selon revendication 2,
**caractérisée en ce que** la barre de protection contre les connexions (10) est disposée à proximité du sol.

4. Remorque de l'une des revendications 1 à 3,
**caractérisée en ce que** le point d'attache de la bande à la remorque (2) comporte un mécanisme d'enroulement précontraint et **en ce qu'**une traction de la bande exercée sur le point d'attache est détectée par le mécanisme d'enroulement.

5. Remorque selon l'une des revendications 1 à 4,
**caractérisée en ce que** la bande (16) présente sur le véhicule situé devant est guidée par l'intermédiaire de deux guides de renvoi (17) et ramenée à la remorque (2) et par conséquent le long des deux côtés de l'espace intermédiaire et **en ce que** la remorque (2) comporte deux guides de renvoi (17) correspondants.

6. Remorque selon l'une des revendications 1 à 5,
**caractérisée en ce que** le signal d'urgence transmis par l'intermédiaire de la liaison de signal déclenche un arrêt d'urgence du tracteur (3).

7. Remorque selon l'une des revendications 1 à 6,
**caractérisée en ce que** la liaison de signal est constituée d'un émetteur pour la transmission de signal sans fil.

8. Remorque selon l'une des revendications 1 à 7,
**caractérisée en ce que** la liaison de signalisation est constituée de deux lignes guidées à travers la remorque (2) de manière à ce qu'elles puissent être reliées au véhicule situé devant et à une remorque (2) éventuellement attelée, et **en ce que** le signal d'urgence est généré par l'interruption d'au moins une ligne.

9. Train routier comportant un tracteur muni d'un attelage de remorque et au moins une remorque (2) selon l'une des revendications 1 à 8.
